# FASCICULE DE BREVET EUROPEEN

(11) **EP 4 115 050 B1**
(45) Date de publication et mention de la délivrance du brevet: **31.01.2024**
(21) Numéro de dépôt: 21710548.5
(22) Date de dépôt: 19.02.2021
(51) Int. Cl.: F01D 5/14, F01D 5/28, B29C 70/24, B29D 99/00

(54) **TEXTURE FIBREUSE POUR AUBE DE TURBOMACHINE EN MATERIAU COMPOSITE**
FASERSTRUKTUR FÜR EINE TRIEBWERKSSCHAUFEL AUS VERBUNDWERKSTOFF
FIBROUS TEXTURE FOR TURBINE ENGINE BLADE MADE OF COMPOSITE MATERIAL

(30) Priorité: 02.03.2020 FR 2002078
(43) Date de publication de la demande: 11.01.2023
(73) Titulaire: SAFRAN AIRCRAFT ENGINES, 75015 Paris (FR)
(72) Inventeur: POUZADOUX, Frédéric, Jean-Bernard, 77550 MOISSY-CRAMAYEL (FR); GUIVARC'H, Jérémy, 77550 MOISSY-CRAMAYEL (FR); DE GAILLARD, Thomas, Alain, 77550 MOISSY-CRAMAYEL (FR)
(74) Mandataire: Cabinet Beau de Loménie
(86) Numéro de dépôt international: PCT/FR2021/050304
(87) Numéro de publication internationale: WO 2021/176162

(56) Documents cités:
- EP-A1- 3 287 265
- EP-A1- 3 292 991
- US-A1- 2013 224 035
- US-B2- 9 162 750

## Description

### Domaine Technique

L'invention se rapporte au domaine général des pièces en matériau composite pour l'aéronautique. Plus précisément, l'invention concerne une texture fibreuse destinée à former le renfort d'une aube de turbomachine en matériau composite.

### Technique antérieure

Dans le domaine des turbomachines aéronautiques, la diminution de la masse des pièces est une problématique majeure tant au niveau des coûts de fabrication de ces pièces, qu'au niveau de l'efficacité énergétique et environnementale des turbomachines. Cette problématique a entraîné rapidement le développement de pièces en matériaux composites, notamment à matrice organique (CMO) pour remplacer les traditionnelles pièces métalliques dans différentes parties du turboréacteur comme les aubes de Compresseur Basse Pression. La demande EP3292991 A1 divulgue par exemple une aube de soufflante en matériau composite à fibres comprenant une matrice polymère, des fibres de carbone et des fibres sans carbone.

La localisation de ces aubes, par exemple dans la soufflante ou le compresseur, peut les exposer à des impacts d'objets de natures diverses (oiseaux, graviers, blocs de glace, sable, etc.) et les aubes peuvent alors s'endommager ou s'éroder.

Au niveau du bord d'attaque des aubes composites, il est usuel d'avoir une protection métallique (clinquant par exemple) pour protéger celui-ci des impacts tout en conservant une masse et une érosion réduite. Le corps des aubes en matériau composite de la soufflante peut présenter à d'autres endroits comme par exemple au bord de fuite ou en tête, des zones de faible épaisseur pour répondre à des contraintes aérodynamiques qui sont aussi susceptibles de s'endommager en cas d'impact.

Il existe donc un besoin pour une aube de turbomachine de masse réduite qui résiste de façon optimisée aux impacts.

### Exposé de l'invention

A cet effet, l'invention propose une texture fibreuse destinée à former le renfort fibreux d'une aube de turbomachine en matériau composite comprenant un renfort fibreux densifié par une matrice, la texture étant en une seule pièce et présentant un tissage tridimensionnel entre une pluralité de fils ou torons de chaîne en premières fibres (ou premier matériau fibreux) s'étendant selon une direction radiale et une pluralité de fils ou torons de trame en premières fibres s'étendant selon une direction de corde, la texture comprenant une partie de pied d'aube et une partie de pale d'aube s'étendant entre la partie de pied d'aube et une extrémité libre de la texture fibreuse. La texture fibreuse est caractérisée en ce que la partie de pale d'aube présente une zone renforcée au voisinage de l'extrémité libre de la texture comprenant des fils ou torons de trame en deuxièmes fibres (ou deuxième matériau fibreux) différentes des premières fibres (ou premier matériau fibreux), ce deuxième type de fibres présentant un allongement à la rupture supérieur à celui des premières fibres, et en ce qu'un premier ratio en deuxièmes fibres dans la zone renforcée est supérieur à un deuxième ratio en deuxièmes fibres dans le reste de la partie de pale d'aube.

On entend par « ratio en deuxièmes fibres dans une partie de texture », le rapport entre la quantité (en volume) de deuxièmes fibres et la quantité de premières fibres dans cette partie. Les fils ou torons peuvent être constitués uniquement par des fibres d'un même matériau. Par « tissage tridimensionnel » ou « tissage 3D », il faut comprendre un mode de tissage par lequel certains au moins des fils de chaine lient des fils de trame sur plusieurs couches de trame. Une inversion des rôles entre chaîne et trame est possible dans le présent texte et doit être considérée comme couverte aussi par les revendications.

Avec une telle texture fibreuse, on peut réaliser une aube capable de mieux résister aux impacts d'objets. L'allongement à la rupture plus important des deuxièmes fibres localisées dans la zone renforcée permet à l'aube qui comprendra une telle texture en tant que renfort de tenir ces impacts sans augmenter de façon significative sa masse. L'utilisation des deuxièmes fibres pour des fils ou torons de trame rend la fabrication d'une telle texture fibreuse aisée puisqu'il suffit de remplacer les fils ou torons de trame en premières fibres par ceux en deuxièmes fibres pendant le tissage dans un métier à tisser, comme il sera détaillé plus loin.

Dans un exemple de réalisation, la zone renforcée peut s'étendre à partir de l'extrémité libre de la texture fibreuse sur une longueur inférieure ou égale à 40% de la longueur totale de la texture mesurée dans la direction radiale, par exemple sur une longueur inférieure ou égale à 10% de cette longueur totale de la texture.

Dans un exemple de réalisation, dans la zone renforcée, les fils ou torons de trame en deuxièmes fibres peuvent être majoritairement présents dans une couche en surface de la texture fibreuse. La couche peut présenter une épaisseur inférieure à l'épaisseur de la texture fibreuse, et un ratio en deuxièmes fibres dans la couche peut être supérieur au ratio en deuxièmes fibres dans le reste de l'épaisseur de la texture.

Dans un exemple de réalisation, la texture peut présenter une face correspondant à une face extrados de l'aube, et la couche peut s'étendre à partir de ladite face.

Cette localisation en surface de la texture fibreuse permet de limiter l'endommagement en compression et en traction dans le sens trame lors d'impacts, et permet à l'aube qui comprend une telle texture en tant que renfort de conserver sa géométrie. Une telle disposition permet en outre de réduire le nombre de fils ou torons de trame en deuxièmes fibres employés et donc la masse de l'ensemble.

Dans un exemple de réalisation, les premières fibres peuvent être en carbone, et les deuxièmes fibres peuvent être en un matériau choisi parmi les suivants : verre, basalte, aramide ou polyester.

Dans un exemple de réalisation, le matériau des premières fibres et des deuxièmes fibres peut être le carbone.

Dans un exemple de réalisation, le premier ratio peut être entre 10% et 70%, plus préférentiellement entre 20% et 40%.

L'invention a également pour objet une aube de soufflante en matériau composite comprenant un renfort fibreux densifié par une matrice, le renfort fibreux de l'aube étant constitué par une texture fibreuse telle que celle décrite ci-avant.

Dans un exemple de réalisation, l'aube peut comprendre en outre un bord d'attaque métallique, ledit bord d'attaque métallique recouvrant des extrémités des fils ou torons de trame en deuxièmes fibres de la zone renforcée du renfort fibreux. Cette disposition permet au bord d'attaque métallique de protéger les extrémités de ces fils ou torons de trame contre l'érosion.

L'invention vise enfin une turbomachine aéronautique comprenant une soufflante comportant un disque rotatif et une pluralité d'aubes telle que celle présentée ci-avant montées sur le disque rotatif.

Un procédé de fabrication d'une aube de soufflante en matériau composite comprenant un renfort fibreux densifié par une matrice peut comprendre les étapes suivantes : on réalise une texture fibreuse telle que celle présentée ci-avant, on met en forme ladite texture pour obtenir une préforme d'aube, et on forme une matrice dans la porosité de la préforme pour obtenir l'aube. La texture fibreuse est obtenue par tissage tridimensionnel, et peut présenter par exemple une armure du type interlock. La matrice peut être une matrice organique et obtenue à partir d'une résine. La matrice peut être ainsi formée par moulage par injection de résine (procédé RTM ou « Resin Transfer Molding »).

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
[Fig. 1] La figure 1 est une vue schématique en coupe longitudinale d'une turbomachine aéronautique.
[Fig. 2] La figure 2 montre une aube de soufflante de turbomachine aéronautique selon un mode de réalisation de l'invention.
[Fig. 3] La figure 3 montre une texture fibreuse selon un mode de réalisation de l'invention.
[Fig. 4] La figure 4 montre une vue schématique en coupe transversale de la texture fibreuse de la figure 3.
[Fig. 5] La figure 5 montre une vue agrandie de la figure 4 au niveau d'une face de la texture correspondant à une face extrados où l'on voit le trajet des fils.
[Fig. 6] La figure 6 montre l'emplacement pour un bord d'attaque métallique sur une aube de soufflante de turbomachine aéronautique selon un mode de réalisation de l'invention.

### Description des modes de réalisation

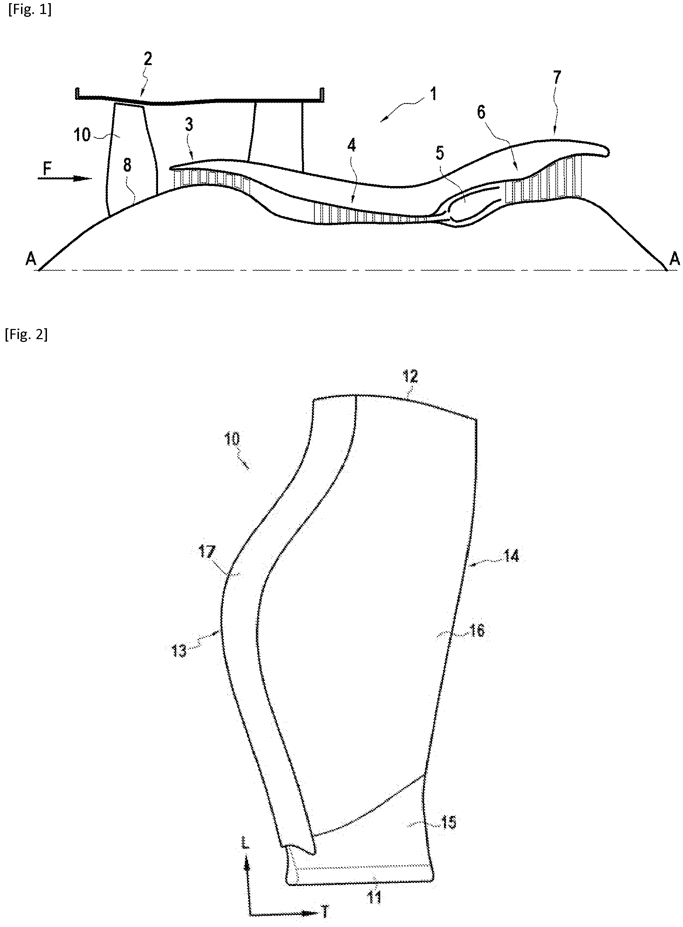

La figure 1 montre une vue schématique en coupe longitudinale d'une turbomachine aéronautique 1, ici un turboréacteur à double flux centré sur l'axe A-A. Elle comporte, d'amont en aval dans le sens F d'écoulement du flux gazeux dans la turbomachine : une soufflante 2, un compresseur basse pression 3, un compresseur haute pression 4, une chambre de combustion 5, une turbine haute pression 6, et une turbine basse pression 7.

La soufflante 2 comprend notamment un disque rotatif 8 sur lequel sont montées une pluralité d'aubes de soufflante 10, dont une est représentée sur la figure 2.

L'aube de soufflante 10 s'étend selon une direction radiale ou longitudinale L entre un pied 11 et une extrémité libre 12, et selon une direction de corde, axiale ou transversale T entre un bord d'attaque 13 et un bord de fuite 14. Entre le pied 11 et l'extrémité 12, l'aube comporte une échasse 15 et un corps de pale 16 situé entre l'échasse 15 et l'extrémité 12. L'aube de soufflante 10 est en matériau composite comprenant un renfort fibreux densifié par une matrice.

Dans l'exemple illustré, l'aube 10 présente un bord d'attaque métallique 17, sous la forme par exemple d'un clinquant métallique. Un tel bord d'attaque métallique 17 peut être fixé après avoir obtenu l'aube 10, ou être intégré à l'aube 10 au cours de son procédé de fabrication, de façon connue.

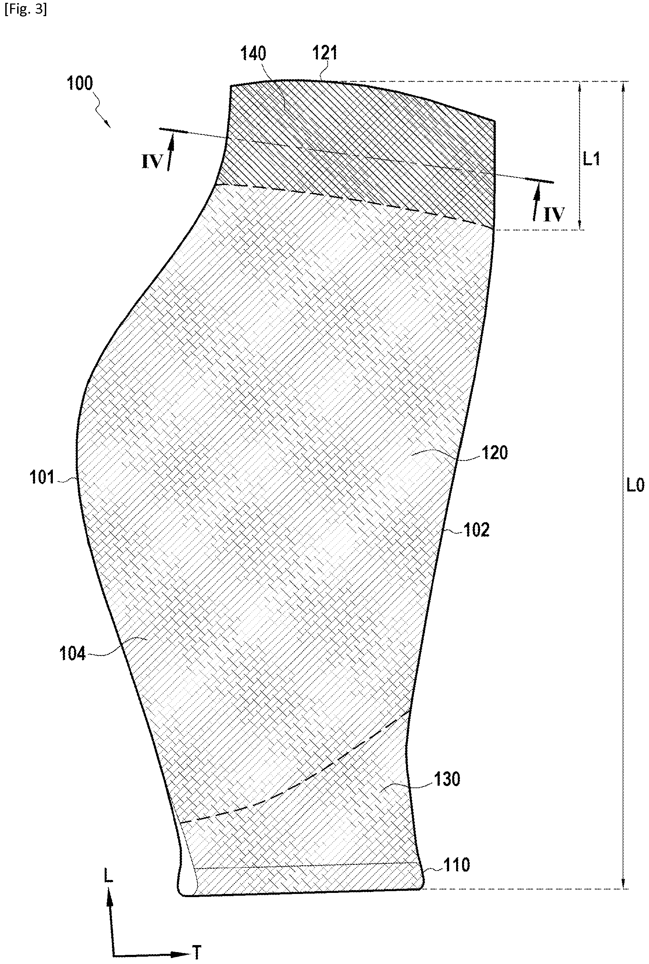

La figure 3 montre une vue schématique d'une texture fibreuse 100 destinée à former le renfort fibreux d'une aube de turbomachine telle que celle de la figure 2. Cette texture fibreuse peut être obtenue par exemple par tissage tridimensionnel dans un métier à tisser de type Jacquard d'une ébauche fibreuse et découpe des fils excédentaires de l'ébauche fibreuse tissée.

La texture fibreuse 100 peut présenter un tissage tridimensionnel, et comprendre par exemple majoritairement une armure interlock ou multicouches. Par « armure interlock », il faut comprendre une armure de tissage tridimensionnel dont chaque couche de fils de chaîne lie plusieurs couches de fils de trame avec tous les fils de la même colonne de chaîne ayant le même mouvement dans le plan de l'armure. Le document WO2006/136755 décrit la réalisation de telles armures de tissage. Comme il sera décrit ultérieurement, cette texture fibreuse pourra être mise en forme puis densifiée pour obtenir une aube de soufflante 10 telle que celle illustrée de la figure 2.

La texture fibreuse 100 s'étend selon la direction radiale L entre une partie de pied d'aube 110 et une partie de pale d'aube 120. La texture 100 présente une extrémité libre 121 située à l'extrémité de la partie de pale d'aube 120 opposée à la partie de pied 110. Une partie d'échasse d'aube 130 est présente entre la partie de pied d'aube 110 et la partie de pale d'aube 120. De façon générale, la partie de pied d'aube 110 est plus épaisse que la partie d'échasse 130 d'aube, et l'épaisseur de la partie de pale d'aube 120 est variable. La texture fibreuse 100 s'étend selon la direction de corde T entre un premier bord 101 destiné à former le bord d'attaque 13 de l'aube 10 et un deuxième bord 102 destiné à former le bord de fuite 14 de l'aube 10.

Dans l'exemple illustré, la direction radiale L correspond également à la direction générale selon laquelle s'étendent les fils de chaîne dans la texture fibreuse 100, alors que la direction de corde T correspond à la direction générale selon laquelle s'étendent les fils de trame. On notera que, dans tout le texte, chaîne et trame peuvent être intervertis.

La texture fibreuse 100 présente un tissage tridimensionnel ou multicouches entre une pluralité de fils de chaîne en premières fibres et une pluralité de fils de trame en premières fibres. Conformément à l'invention, la texture fibreuse 100 présente également des fils de trame en deuxièmes fibres, différentes des premières, et qui présentent un allongement à la rupture supérieur à celui des premières fibres. Plus précisément, la texture fibreuse 100 présente une zone renforcée 140 au voisinage de l'extrémité libre 121 de la texture 100 qui comprend des fils de trame en deuxièmes fibres. Un premier ratio en deuxièmes fibres dans la zone renforcée est supérieur à un deuxième ratio en deuxièmes fibres dans le reste de la partie de pale d'aube 120. Dans un mode de réalisation particulier, la texture fibreuse comprend des première et deuxième fibres uniquement dans la zone renforcée, le reste de la texture comprenant un autre type de fibres. En d'autres termes, les deuxièmes fibres sont majoritairement présentes dans la zone renforcée 140 dans la partie de pale d'aube 120, et localisées dans les fils de trame de ladite zone 140.

La zone renforcée 140 peut s'étendre à partir de l'extrémité 121 de la texture fibreuse 100 sur une longueur L1 inférieure ou égale à 40% de la longueur totale L0 de la texture 100 mesurée dans la direction radiale L, par exemple sur une longueur inférieure ou égale à 10% de la longueur totale de la texture.

Le matériau des premières fibres peut être le carbone. Le matériau des deuxièmes fibres peut être choisi parmi les suivants : carbone, verre, basalte, aramide, polyester, ou une combinaison de ces matériaux. Le tableau suivant donne des allongements à la rupture communs de plusieurs fibres pouvant être utilisées.

**[Table 1]**

| Matériau des fibres - Référence | Allongement à rupture (%) |
|---|---|
| HexTow^{®} IM7 | 1,9 |
| Toraya^{®} T700 | 2,1 |
| Toraya^{®} T30S | 1,9 |
| Toraya^{®} T1000 | 2,2 |
| Toraya^{®} T1100 | 2 |
| Verre - GY « S-2 Glass^{®} » | 5,2 |
| Verre - « E-glass » | 4,4 |
| Polyester | 3,5 |
| Basalte | 3 |
| Aramide - Dupont « Kevlar^{®} 49 » | 2,4 |

Par exemple, on peut choisir du carbone pour les premières fibres et du verre pour les deuxièmes fibres. On peut aussi utiliser plusieurs types de fils ou torons de trame qui comprennent des fibres différentes ayant un allongement à la rupture supérieur à celui des premières fibres. On notera que le matériau des premières et deuxièmes fibres peut être identique. Par exemple, les premières et deuxièmes fibres peuvent être en carbone, à condition que leurs allongements à la rupture soient différents. Par exemple, on peut choisir des premières fibres de carbone en HexTow^{®} IM7 (commercialisé par la société Hexcel), et des deuxièmes fibres de carbone en Torayca^{®} T1000 (commercialisé par la société Toray).

L'allongement à la rupture des premières fibres peut être par exemple inférieur ou égal à 2,1 %, et celui des deuxièmes fibres supérieur ou égal à 2,4%.

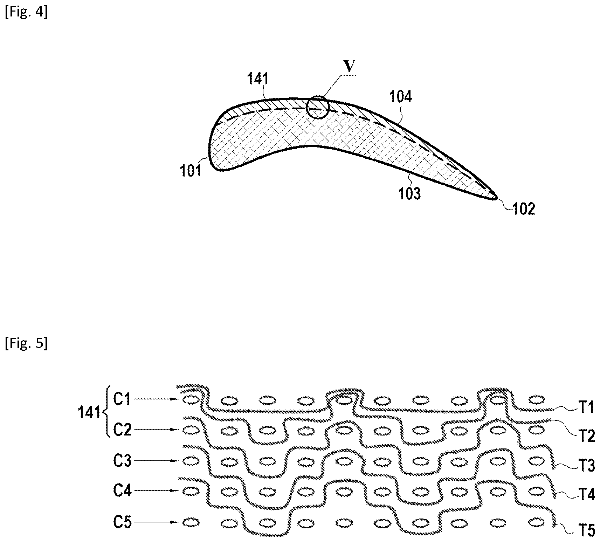

Les figures 4 et 5 illustrent un mode de réalisation de l'invention dans lequel les fils ou torons en deuxièmes fibres sont présents uniquement dans une couche en surface de la texture fibreuse 100.

La figure 4 montre une vue en coupe de la texture 100. Lorsque les fils sont présents dans une couche ayant une épaisseur prédéterminée située en surface de la texture fibreuse (l'épaisseur prédéterminée étant inférieure à l'épaisseur totale de la texture fibreuse à l'emplacement considéré), on dit également que les fils sont présents « en peau » de la texture fibreuse 100. Sur cette vue on peut identifier une première face 103 de la texture fibreuse 100 destinée à former une face intrados d'aube, et une deuxième face 104 opposée à la première face destinée à former une face extrados d'aube. Dans cet exemple, les fils de trame en deuxièmes fibres sont localisés dans la zone renforcée 140 dans une couche 141 située en surface de la texture 100 et du côté de la deuxième face 104. Cette disposition permet de modifier les propriétés mécaniques de l'aube seulement dans des zones en peau qui sont les plus sollicitées lors d'impacts.

La figure 5 montre une vue agrandie de la figure 4 où l'on peut voir le trajet des différents fils au niveau de la couche 141. Dans l'armure de tissage représentée, on peut voir cinq couches de fils de chaîne C1 à C5 et cinq fils de trame T1 à T5. Le fil de trame T1 est tissé en peau avec une armure bidimensionnelle de type satin, alors que les fils T2 à T5 décrivent une armure tridimensionnelle de type interlock. Les fils de chaîne C1 à C5 et de trame T3 à T5 peuvent être en premières fibres, et les fils de trame T1 et T2 présents dans la couche 141 peuvent être en deuxièmes fibres.

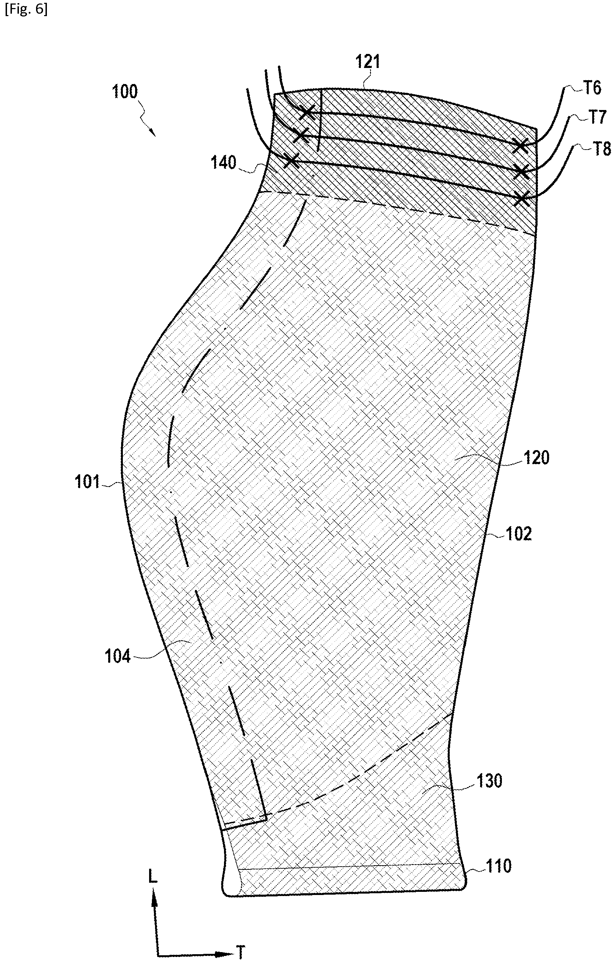

La figure 6 illustre une autre caractéristique avantageuse de l'invention, concernant le positionnement du bord d'attaque métallique par rapport aux extrémités ou terminaisons des fils de trame en deuxièmes fibres.

On a représenté schématiquement sur la figure 6 des fils de trame T6, T7 et T8 en deuxièmes fibres, qui sont localisés dans la zone renforcée 140. Après tissage, des fils de trame T6 à T8 sortent de la texture fibreuse 100 au niveau d'emplacements identifiés par des croix. Le fait que les sorties des fils de trame ne soient pas nécessairement au même niveau dans la direction de corde T est dû à la variation du nombre de fils de chaîne le long de la texture 100 pour lui conférer éventuellement une épaisseur variable.

Il est avantageux de prévoir que le bord d'attaque métallique 17 qui sera fixé sur l'aube de soufflante 10 recouvre les extrémités des fils ou torons de trame T6 à T8 (une fois que les parties non tissées de ces fils sont découpées) afin de les protéger de l'érosion. Sur la figure 6, l'emplacement du bord d'attaque métallique 17 est indiqué en pointillés et on peut voir que les extrémités ou terminaison des fils T6 à T8 (situées au niveau des croix) seront bien recouvertes par celui-ci.

Pour obtenir une aube de soufflante 10 telle que celle illustrée sur la figure 2, on réalise une texture fibreuse 100 par tissage tridimensionnel, on met en forme ladite texture pour obtenir une préforme d'aube ayant la géométrie adaptée, et on forme une matrice dans la porosité de la préforme pour obtenir l'aube. On peut au moment du tissage remplacer des fils de trame en premières fibres par des fils de trame en deuxièmes fibres dans la zone renforcée 140 de la texture fibreuse. L'aube de soufflante 10 peut être réalisée par un procédé de moulage par transfert de résine (RTM ou « Resin Transfer Molding ») où la préforme est placée dans un moule ayant la forme de l'aube et dans lequel une résine est injectée puis polymérisée. Dans ce contexte, la matrice peut être une matrice organique et obtenue à partir d'une résine de type époxy.

## Revendications

1. Aube (10) de turbomachine (1) en matériau composite
comprenant un renfort fibreux densifié par une matrice, le renfort fibreux étant constituée par une texture fibreuse (100), la texture (100) étant en une seule pièce et présentant un tissage tridimensionnel entre une pluralité de fils ou torons de chaîne (C1-C5) en premières fibres s'étendant selon une direction radiale (L) et une pluralité de fils ou torons de trame (T3-T5) en premières fibres s'étendant selon une direction de corde (T), la texture comprenant une partie de pied de l'aube (110) et une partie de pale de l'aube (120) s'étendant entre la partie de pied de l'aube et une extrémité libre (121) de la texture fibreuse opposée au pied d'aube,
**caractérisée en ce que** la partie de pale de l'aube (120) présente une zone renforcée (140) au voisinage de l'extrémité libre (121) de la texture comprenant des fils ou torons de trame (T1, T2) en deuxièmes fibres différentes des premières fibres, les deuxièmes fibres présentant un allongement à la rupture supérieur à celui des premières fibres, et **en ce qu'**un premier ratio en deuxièmes fibres dans la zone renforcée (140) est supérieur à un deuxième ratio en deuxièmes fibres dans le reste de la partie de pale d'aube (120).

2. Aube selon la revendication 1, dans laquelle la zone renforcée (140) s'étend à partir de l'extrémité libre (121) de la texture fibreuse sur une longueur (L1) inférieure ou égale à 40% de la longueur totale (L0) de la texture mesurée dans la direction radiale (L).

3. Aube selon la revendication 1 ou la revendication 2, dans laquelle, dans la zone renforcée (140), les fils ou torons de trame (T1, T2) en deuxièmes fibres sont majoritairement présents dans une couche (141) en surface de la texture fibreuse (100).

4. Aube selon la revendication 3, dans laquelle la texture présente une face (104) correspondant à une face extrados de l'aube (10), et la couche (141) s'étend à partir de ladite face.

5. Aube selon l'une quelconque des revendications 1 à 4, dans laquelle les premières fibres sont en carbone, et les deuxièmes fibres sont en un matériau choisi parmi les suivants : verre, basalte, aramide ou polyester.

6. Aube selon l'une quelconque des revendications 1 à 5, dans laquelle le premier ratio est compris entre 10% et 70%.

7. Aube selon l'une quelconque des revendications 1 à 6, **caractérisée en ce que** l'aube est une aube de soufflante (10).

8. Aube de soufflante selon la revendication 7, comprenant en outre un bord d'attaque métallique (17), ledit bord d'attaque métallique recouvrant des extrémités des fils ou torons de trame (T6, T7, T8) en deuxièmes fibres de la zone renforcée (140) du renfort fibreux.

9. Turbomachine aéronautique (1) comprenant une soufflante (2) comportant un disque rotatif (8) et une pluralité d'aubes (10) selon la revendication 7 ou 8 montées sur le disque rotatif.

## Patentansprüche

1. Schaufel (10) aus Verbundmaterial, das eine Faserverstärkung umfasst, die durch eine Matrix verdichtet ist, für eine Turbomaschine (1), wobei die Faserverstärkung aus einer Fasertextur (100) gebildet wird, wobei die Textur (100) aus einem einzigen Stück besteht und eine dreidimensionale Verwebung aus einer Vielzahl von Kettfäden oder -litzen (C1-C5) aus ersten Fasern, die sich entlang einer radialen Richtung (L) erstrecken, und einer Vielzahl von Schussfäden oder -litzen (T3-T5) aus ersten Fasern aufweist, die sich entlang einer Kordrichtung (T) erstrecken, wobei die Textur einen Schaufelfußteil (110) und einen Schaufelblattteil (120) umfasst, der sich zwischen dem Schaufelfußteil und einem freien Ende (121) der Fasertextur gegenüber dem Schaufelfuß erstreckt,
**dadurch gekennzeichnet, dass** der Schaufelblattteil (120) eine verstärkte Zone (140) benachbart zu dem freien Ende (121) der Textur aufweist, die Schussfäden oder -litzen (T1, T2) aus zweiten Fasern umfasst, die sich von den ersten Fasern unterscheiden, wobei die zweiten Fasern eine höhere Bruchdehnung aufweisen als die ersten Fasern, und dass ein erstes Verhältnis an zweiten Fasern in der verstärkten Zone (140) größer ist als ein zweites Verhältnis an zweiten Fasern in dem Rest des Schaufelblattteils (120).

2. Schaufel nach Anspruch 1, wobei die verstärkte Zone (140) sich ausgehend von dem freien Ende (121) der Fasertextur über eine Länge (L1) kleiner oder gleich 40 % der Gesamtlänge (L0) der Textur, gemessen in der radialen Richtung (L), erstreckt.

3. Schaufel nach Anspruch 1 oder Anspruch 2, wobei in der verstärkten Zone (140) die Kettfäden oder -litzen (T1, T2) aus zweiten Fasern vorwiegend in einer Schicht (141) an der Oberfläche der Fasertextur (100) vorliegen.

4. Schaufel nach Anspruch 3, wobei die Textur eine Seitenfläche (104) aufweist, die einer äußeren Wölbungsseite der Schaufel (10) entspricht, und die Schicht (141) sich ausgehend von der Seitenfläche erstreckt.

5. Schaufel nach einem der Ansprüche 1 bis 4, wobei die ersten Fasern aus Kohlenstoff bestehen, und die zweiten Fasern aus einem Material bestehen, das aus den folgenden ausgewählt ist: Glas, Basalt, Aramid oder Polyester.

6. Schaufel nach einem der Ansprüche 1 bis 5, wobei das erste Verhältnis zwischen 10 % und 70 % liegt.

7. Schaufel nach einem der Ansprüche 1 bis 6, **dadurch gekennzeichnet, dass** die Schaufel eine Gebläseschaufel (10) ist.

8. Gebläseschaufel nach Anspruch 7, ferner umfassend eine Vorderkante (17) aus Metall, wobei die Vorderkante aus Metall die Enden der Schussfäden oder -litzen (T6, T7, T8) aus zweiten Fasern der verstärkten Zone (140) der Faserverstärkung bedeckt.

9. Turbomaschine für ein Flugzeug (1), umfassend ein Gebläse (2), das eine rotierende Scheibe (8) und mehrere Schaufeln (10) nach Anspruch 7 oder 8 beinhaltet, die auf der rotierenden Scheibe montiert sind.

## Claims

1. Blade (10) for a turbine engine (1) made of composite material
comprising a fibrous reinforcement densified by a matrix, the fibrous reinforcement consisting of a fibrous texture (100), the texture (100) being in a single piece and having a three-dimensional weave between a plurality of first fibre warp yarns or strands (C1-C5) extending in a radial direction (L) and a plurality of first fibre weft yarns or strands (T3-T5) extending in a chord direction (T), the texture comprising a blade root portion (110) and a blade aerofoil portion (120) extending between the blade root portion and a free end (121) of the fibrous texture opposite the blade root,
**characterised in that** the blade aerofoil portion (120) has a reinforced area (140) in the vicinity of the free end (121) of the texture comprising weft yarns or strands (T1, T2) made of second fibres different from the first fibres, the second fibres having an elongation at break greater than that of the first fibres, and **in that** a first ratio of second fibres in the reinforced area (140) is greater than a second ratio of second fibres in the remainder of the rest of the blade aerofoil portion (120).

2. Blade according to claim 1, wherein the reinforced area (140) extends from the free end (121) of the fibrous texture over a length (L1) less than or equal to 40% of the total length (L0) of the texture measured in the radial direction (L).

3. Blade according to claim 1 or claim 2, wherein, in the reinforced area (140), the second fibre weft yarns or strands (T1, T2) are mostly present in a surface layer (141) of the fibrous texture (100).

4. Blade according to claim 3, wherein the texture has a face (104) corresponding to a suction face of the blade (10), and the layer (141) extends from said face.

5. Blade according to any one of claims 1 to 4, wherein the first fibres are made of carbon and the second fibres are made of a material chosen from the following: glass, basalt, aramid or polyester.

6. Blade according to any one of claims 1 to 5, wherein the first ratio is between 10% and 70%.

7. Blade according to any one of claims 1 to 6, **characterised in that** the blade is a fan blade (10).

8. Fan blade according to claim 7, further comprising a metallic leading-edge (17), said metallic leading edge covering the ends of the second fibre weft yarns or strands (T6, T7, T8) of the reinforced area (140) of the fibrous reinforcement.

9. Aeronautical turbine engine (1) comprising a fan (2) comprising a rotating disc (8) and a plurality of blades (10) according to claim 7 or 8 mounted on the rotating disc.
